# EUROPEAN PATENT APPLICATION

(11) **EP 1 782 717 A2**
(43) Date of publication of application: **09.05.2007**
(21) Application number: 06121674.3
(22) Date of filing: 03.10.2006
(51) Int. Cl.: A47J 27/18

(54) **Pasta-cooking kettle and arrangement for measuring the saltiness of the water**

(30) Priority: 04.11.2005 IT PN20050080
(71) Applicant: ELECTROLUX PROFESSIONAL S.p.A., 33170 Pordenone (IT)
(72) Inventor: TOPPANO, Michele, 33036, MERETO DI TOMBA (Udine) (IT); FADELLI, Marino, 31014, COLLE UMBERTO (Treviso) (IT); RAUS, Dragan, 33080, PORCIA (PN) (IT)
(74) Representative: Giugni, Valter

(57) **Abstract**

Arrangement (2) for automatically measuring the salt concentration in cooking water, comprising: a kettle (1) containing the cooking water, wherein said sensor (2) comprises a toroidal probe (5) that is submerged in the cooking water bath (3) and on an end portion of which there is provided an annular ferromagnetic core (6,6A), round which there are wound two distinct conductive windings (7,8), the respective terminals of which are connected outside; said probe comprises a sensor (11) for the temperature of the cooking water bath (3). The two windings are connected to a processing and control unit (10), which is provided with means for detecting and measuring the voltages across said two windings, measuring the ratio of these two voltages to each other, and processing said ratio so as to produce a value that correlates to the electric conductivity of the cooking water bath (3), wherein the value of the electric conductivity of the cooking water bath (3) is furthermore rectified with the value of the temperature being measured by said temperature sensor (11).

## Description

The present invention refers to a boiling kettle designed to cook pasta and an improved arrangement for measuring the degree of saltiness of the water contained in said kettle.

It is a largely known fact that, in mass catering applications and professional kitchens in general, when quite large amounts of pasta are cooked in water in successive batches, the need arises for a correct water salting level to be ensured for each successive batch being cooked. In this particular kind of application, in fact, the water used for cooking is not simply disposed of and changed after each batch, but is rather used again to perform the subsequent cooking cycles in view of saving the considerable amount of energy that would on the contrary have to be used to heat up the water for the subsequent cooking cycles if these were carried out with fresh water filled each time.

Furthermore, having almost boiling water readily available at the start of each cooking cycle enables the required heat-up time, which is generally known to constitute a critical factor whenever considerable amounts of food have to be cooked in a very short time or at a fast rate, to be reduced to almost zero.

However, there are some problems connected with such particular habit and these problems are practically due to the need for the concentration of salt in the water to be measured each time, and the salt that has been taken up and subtracted by the formerly cooked food to be duly compensated for and reintegrated, as this is exhaustively described in the Italian patent application no. PN2004A000075, to which reference should therefore be made for a more detailed explanation in this connection, and which also describes some drawbacks that are encountered with prior-art salt measuring arrangements.

The salt-concentration measuring apparatus described in the above-cited publication is effective in exemplarily solving the problem of measuring and detecting the conductivity of the cooking water by means of two metal probes that are submerged in the cooking water and are periodically cleaned and cleared of cooking residues with a cleaning method based on the use of appropriate rubbing members, against which said probes are caused to rotate with the aid of motor-driven means.

This solution, however, has turned out to be rather delicate and - under heavy duty conditions - scarcely reliable, owing basically to the need of providing and using the above-cited rotating elements and the related kinematic mechanisms. The use of these elements has in fact been fund to be rather unsatisfactory, owing mainly to functional deteriorations of a various nature and the malfunction of the driving means used to transmit the rotary motion to said probes, as caused by the severe ambient conditions, i.e. the elevated temperatures and level of moisture, in which they are due to operate, as well as the gradual accumulation of soil thereupon.

It would therefore be desirable, and it is actually a main object of the present invention, to provide a pasta cooking kettle and a related arrangement adapted to detect the degree of saltiness of the cooking water, whose sensors used to measure the water conductivity - i.e. the process parameter, from the value of which the degree of saltiness of the water can then be most easily derived - need to be neither removed from the cooking water nor to be displaced or rotated in any way, i.e. do not require any kinematic mechanism or member to be used.

According to the present invention, this aim is reached in a particular kind of pasta-cooking kettle, and related arrangement for measuring the electric conductivity of the cooking water, incorporating the features as described and recited in the appended claims. Features and advantages of the present invention will anyway be more readily and clearly understood from the description that is given below by way of non-limiting example with reference to the accompanying drawings, in which:
- Figure 1 is a perspective view of conceptual representation of a pasta-cooking kettle provided with a saltiness control arrangement according to the present invention;
- Figure 2 is a perspective outer view of the arrangement illustrated in Figure 1;
- Figure 3 is a front planar view of the of the arrangement illustrated in Figure 2;
- Figure 4 is a simplified schematical view of the wiring diagram relating to the arrangement illustrated in Figures 2 and 3;
- Figure 5 is a cross-sectional view of a conceptual representation of the arrangement illustrated in the preceding Figures;
- Figure 6 is a diagrammatical view of the variation of the water conductivity versus the salt concentration therein, for different temperatures of the cooking water.

The present invention is essentially based on the - inherently well-known - fact that the degree of saltiness of the cooking water affects and alters the value of electric conductivity of the same water; however, unlike prior-art solutions proposed in this connection, according to which this saltiness is identified through the measurement of the conductivity with the aid of direct-measurement means via appropriate electric terminals submerged in the water, according to the present invention use is also made of the physical relation existing between the quantities of magnetic permeability and electric conductivity of the same cooking water.

The present invention teaches to:
- measure the value of the magnetic permeability of the water in the kettle,
- identify that particular value of electric conductivity, which corresponds to that value of magnetic permeability,
- and then find out the salinity value corresponding to the thus identified particular value of electric conductivity.

This is generally obtained by introducing one or two coaxial transformers in the cooking water bath and appropriately energizing the primary winding thereof.

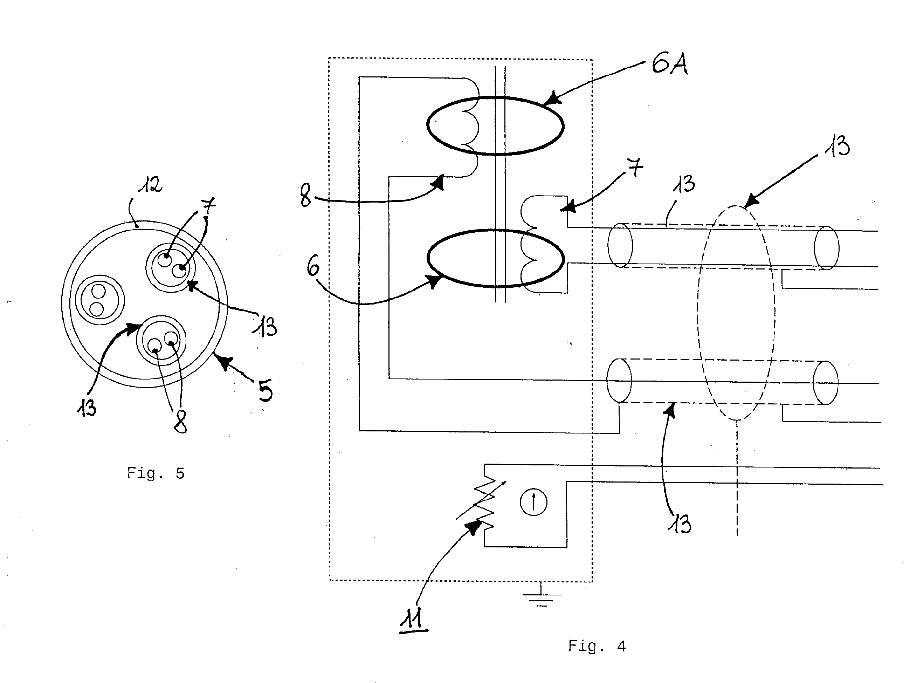

In general, the e.m.f. flux linked with the transformers is for the most part guided by the ferromagnetic material of the core round which the two windings are wound; however, in order to favour the e.m.f. flux linkage with the water of the cooking bath, which works as a further coil in this case, use can be made not of just a single toroidal core, but rather two parallel, adjacent and coaxial toroidal cores, as this is best shown in Figure 4.

In this way, a small portion of electromagnetic flux is able to leak from the core of the primary winding to close up - even through the cooking water bath - at the secondary winding that is wound round the other core

As it can be readily appreciated - and, for the matter, as all those skilled in the art are well aware of - the final voltage induced on the secondary is affected by the amount of flux that does not flow across the core, which in turn depends also on the magnetic permeability of the surrounding environment, i.e. mainly the cooking water bath.

In practice, by appropriately processing the output voltage and comparing it with the input voltage, it is possible for the value of magnetic permeability of the cooking water bath to be experimentally found in a quite easy and quick manner. Then, as this has already been noted hereinbefore, from this magnetic permeability the electric conductivity of the same bath can be derived to eventually find out - in the same way as this is usually done in the prior art - the degree of salt concentration in the bath based on the electric conductivity thereof.

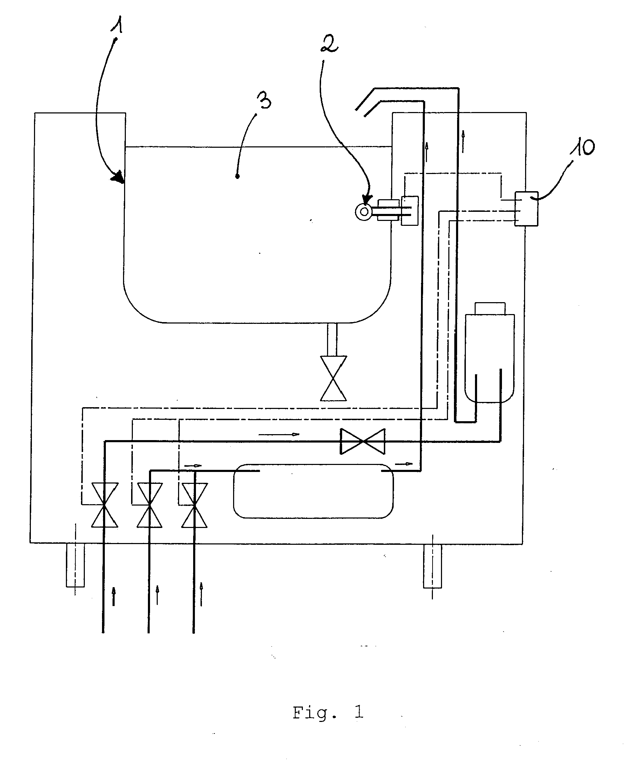

With particular reference to Figure 1, it should be noticed that the vessel, i.e. the pasta cooking kettle 1 is provided with an arrangement 2, which - submerged in the cooking water bath 3 - comprises a transformer of a kind adapted to determine the value of the magnetic permeability of the cooking water bath itself.

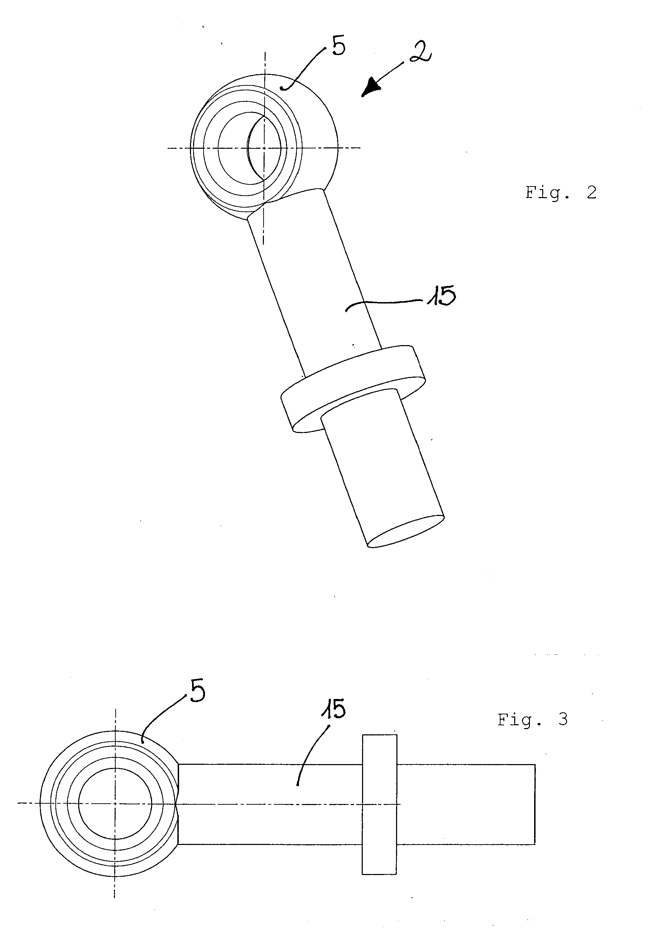

With reference now to Figures 2 to 4, the above-cited arrangement comprises a toroidal probe 5, to an end of which there are applied two toroidal cores 6 and 6A, round which there are wound a primary winding 7 and a secondary winding 8, respectively.

As already explained above, with said secondary winding 8 there is induced an e.m.f. linked with the flux generated by the primary winding 7, which flows through the surrounding external environment and, in particular, part of the cooking water bath.

These two primary and secondary windings 7 and 8 are independently connected to a storage, processing and control unit 10 (shown merely in a symbolical manner in the Figures), in which the signal generated by the secondary winding 8 is received and processed.

Such processing essentially consists in assessing - relative to the signal generated and sent to the primary winding 7, of course - the amplitude of the signal received by the unit, and comparing such amplitude - or voltage ratio - with the data residing in a database that has been pre-stored in said unit 10.

This database will include - further to a plurality of reference data to be used to compare the voltage value, or voltage ratio, as detected by the secondary winding - a plurality of corresponding values of electric conductivity, as previously determined experimentally, and corresponding to each voltage value, or voltage ratio value, being detected by the secondary winding.

From this point on, processing the measured value of electric conductivity is easily performed according to techniques that are generally known as such in the art: for each such voltage value, or voltage ratio value, the corresponding value of electric conductivity and, therefore, saltiness of the cooking water bath can in fact be identified, even by interpolation.

Processing the electric conductivity value can even be done with the use of other calculation methods as largely known as such in the art, e.g. by processing said voltage value, or voltage ratio value, detected by the secondary winding with the help of one or more algorithms that would have been previously entered and stored in said storage, processing and control unit 10.

Regardless of the manner in which it is determined, it has been also found that the value of electric conductivity of the cooking water bath depends also on the temperature of the same bath; in view of having such effect duly compensated for, the probe 5 is advantageously provided with a temperature sensor 11, which can be of a kind as widely known as such in the art, and which is adapted to output a signal that is again sent to said storage, processing and control unit 10. The thus determined electric conductivity value is therefore compared again with and rectified to compensate for the current temperature value of the cooking water bath, thereby ultimately obtaining an electric conductivity value - and, as a result, a water saltiness value - that is fully independent of the water temperature.

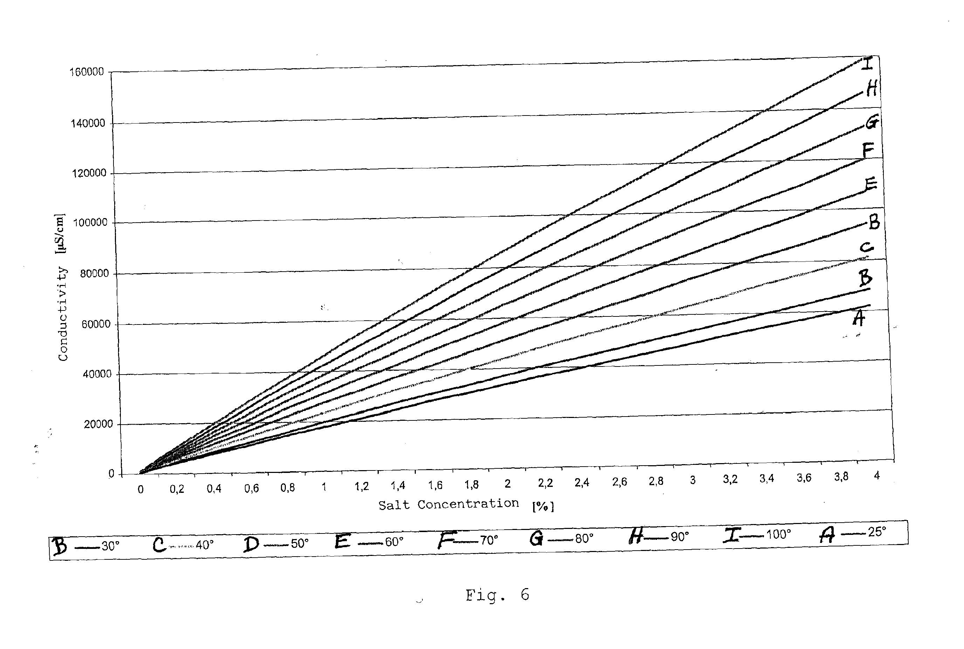

This method can anyway be carried out according to an alternative procedure; in fact with particular reference to Figure 6, the individual straight lines indicated at A, B, ...I represent the variation of the water conductivity of the cooking water bath versus the salt concentration (salt titer in the abscissa) therein, for each temperature of the cooking water tested.

The temperature of each test - and thus referred to each one of said lines - is represented in the lower portion of said Figure 6, wherein each such letter A, B, ...I identifying a respective straight line is associated to a respective test temperature of the cooking water bath.

Those skilled in the art will at this point be capable of most readily realizing that - for the desired result to be attained - they have to proceed as follows, i.e.:
1) identifying the electric conductivity value on the ordinate scale in Figure 6;
2) measuring the temperature of the cooking water temperature;
3) selecting the straight line corresponding to the thus measured temperature;
4) identifying the point of coincidence of the electric conductivity value on the selected curve; and
5) finding finally the corresponding value of salt titer on the axis of the abscissa.

The way in which such correction can be performed is well known to and easily carried out by all those skilled in the art, e.g. even through the use of the above-explained method to calculate the electric conductivity value from the measured value of permeability of the cooking water bath.

The invention, as explained above, is anyway such as to allow for some further improvements.

In a first one of such improvements, the toroidal probe is covered by a protective layer 12, which is effective in protecting the components in said probe from the cooking water therearound by sealing them off, wherein said components also include the temperature sensor 11.

With particular reference to Figures 4 and 5, a shielding sheath 13 encloses and electromagnetically insulates both the two conductors of the primary winding 7 and the two conductors of the secondary winding 8, further of course to the two conductors connected to the temperature sensor 11.

It clearly appears from the above-cited Figures that each one of the windings, along with the connections of the temperature sensor, is provided with an insulating sheath of its own; however, for reasons of greater simplicity the three different sheaths are indicated with the sole and same reference number 13 in said Figures, this simplification being of course such as not to give rise to any possibility of misunderstandings by those skilled in the art.

The above-mentioned shielding sheaths 13 are furthermore connected as usual to a common grounding point (not shown) situated outside the pasta-cooking kettle.

With reference again to Figure 4, it has also been found that the optimum position of said toroidal probe 5 is reached when the central body 15 thereof is applied to a vertical wall 14 of the pasta-cooking kettle 1, wherein said central body 15 preferably extends horizontally.

## Claims

1. Arrangement for automatically measuring the salt concentration in cooking water, preferably for use in professional kitchen appliances, comprising:
- a kettle (1) containing the cooking water (3),
- a sensor adapted to measure the saltiness of said cooking water,
- a processing and control unit (10) adapted to receive signals from said sensor and to process out corresponding control signals therefrom,
**characterized in that** said sensor comprises a toroidal probe (5) adapted to be submerged in the cooking water bath, on a portion of which, preferably at an end portion thereof, there are provided two annular ferromagnetic cores (6, 6A) round which there are wound a first conductive winding (7) and a second conductive winding (8), respectively, the respective terminals of which are connected to said processing and control unit (10).

2. Arrangement for automatically measuring the salt concentration in cooking water according to claim 1, **characterized in that** said probe comprises a sensor (11) for the temperature of the cooking water bath.

3. Arrangement according to claim 2, **characterized in that** said toroidal probe is covered with a protective layer (12) sealing off the interior of said probe from the exterior.

4. Arrangement according to any of the preceding claims, **characterized in that** said two conductive windings (7, 8) are electromagnetically protected by a shielding sheath (13) connected to a grounding lead on the outside of said cooking kettle.

5. Arrangement according to claim 4, **characterized in that** said two windings (7, 8) are connected to said processing and control unit (10), which is provided with means for detecting and measuring the voltages across said two windings, measuring the ratio of these two voltages to each other, and processing said ratio according to algorithms adapted to produce a value that correlates to a respective electric conductivity.

6. Arrangement according to any of the claims 1 to 4, **characterized in that** said two windings (7, 8) are connected to said processing and control unit (10), which is provided with means for detecting and measuring the voltages across said two windings, measuring the ratio of these two voltages to each other, and comparing this ratio with corresponding data in a database, wherein to each one of said data there is associated a respective value of electric conductivity.

7. Arrangement according to claim 5 or 6, **characterized in that** said value correlating to the electric conductivity of the cooking water bath is rectified with the value of the temperature being measured by said temperature sensor (11).

8. Pasta-cooking kettle provided with means for measuring the salt concentration in the cooking water, **characterized in that** a toroidal probe (5) according to any of the preceding claims is arranged thereinside.

9. Pasta-cooking kettle according to claim 8, **characterized in that** said toroidal probe (5) is arranged on an internal vertical wall (14) of said kettle.

10. Pasta-cooking kettle according to claim 9, **characterized in that** said toroidal probe (5) comprises an elongated central body (15), and **in that** said elongated central body is arranged with a horizontal orientation.
